# EUROPÄISCHE PATENTSCHRIFT

(11) **EP 1 263 632 B1**
(45) Veröffentlichungstag und Bekanntmachung des Hinweises auf die Patenterteilung: **26.04.2006**
(21) Anmeldenummer: 99941250.5
(22) Anmeldetag: 21.01.1999
(51) Int. Cl.: B60S 1/34, B60S 1/04

(54) **WISCHERANLAGE**
WIPER SYSTEM
DISPOSITIF D'ESSUYAGE

(30) Priorität: 29.01.1998 DE 19803344
(43) Veröffentlichungstag der Anmeldung: 11.12.2002
(73) Patentinhaber: ROBERT BOSCH GMBH, 70442 Stuttgart (DE)
(72) Erfinder: ZIMMER, Joachim, D-77880 Sasbach (DE)
(86) Internationale Anmeldenummer: PCT/DE1999/000141
(87) Internationale Veröffentlichungsnummer: WO 1999/038736

(56) Entgegenhaltungen:
- EP-A- 0 739 792
- EP-A- 0 806 329
- DE-A- 19 616 944
- US-A- 3 857 595
- PATENT ABSTRACTS OF JAPAN vol. 011, no. 316 (M-631), 15. Oktober 1987 (1987-10-15) & JP 62 099244 A (MAZDA MOTOR CORP), 8. Mai 1987 (1987-05-08)

## Beschreibung

### Stand der Technik

Die Erfindung geht von einer Wischeranlage nach dem Oberbegriff des Anspruchs 1 aus.

Bekannte Scheibenwischer besitzen einen Wischarm, der aus einem Befestigungsteil und einem daran angelenkten Gelenkteil mit einer Wischstange aufgebaut ist. Ferner haben sie ein Wischblatt, das aus einem Tragbügelsystem mit einem übergeordneten Mittelbügel und gelenkig verbundenen, untergeordneten Zwischenbügeln sowie Krallenbügeln und einer Wischleiste aufgebaut ist. Das Wischblatt ist am Wischarm angelenkt, indem ein freies Ende der Wischstange ein Lagerteil hält, das zwischen zwei Seitenwangen des Mittelbügels angeordnet ist und mit einer über einen Umfangsbereich offenen Nabe einen Gelenkbolzen des Mittelbügels umfaßt. Das so gebildete Gelenk führt das Wischblatt während der Schwenkbewegung über die Scheibe, wobei das Gelenk und das Tragbügelsystem es ermöglichen, daß sich die Wischleiste einer Wölbung der Scheibe anpassen kann.

Das Befestigungsteil des Wischarms sitzt auf dem freien Ende einer Wischerwelle, die in einem Wischerlager gelagert ist und über eine Kurbel und ein Gestänge von einem Wischermotor angetrieben wird. Dieser wird von einer Platine gehalten, die an einer Fahrzeugkarosserie befestigt ist und die Wischerlager enthält. Häufig dienen die Wischerlager selbst als Befestigungsstellen, indem sie durch Öffnungen der Fahrzeugkarosserie ragen und unter Zwischenlage schwingungsdämpfender, gummielastischer Elemente mit der Fahrzeugkarosserie verschraubt sind. Es ist aber auch möglich, dass sie über Stützen an der Platine mit der Fahrzeugkarosserie verbunden sind.

Das aus der Fahrzeugkarosserie vorstehende Ende der Wischerwelle stellt bei Unfällen mit Fußgängern eine Gefahrenquelle für Verletzungen dar. Entwürfe für Crash-Vorschriften der europäischen Kommission (EC III/5021/96 EN) definieren in Bezug auf Unfälle mit Fußgängern maximale Beschleunigungswerte, so genannte Kopfverletzungskriterien, im Bereich der Fahrzeughaube an der Wischeranlage. Diese Kriterien sind mit den üblichen Wischeranlagen nicht zu erreichen, selbst wenn die Fahrzeughaube die Wischerwelle überdeckt, da auch in diesem Fall nicht sichergestellt ist, dass der Abstand zwischen der Fahrzeughaube und der Wischerwelle, insbesondere bei geringen Haubenspalten, groß genug ist.

Aus der EP-A-0806 329 ist eine Lagerung für eine Wischerwelle eines Scheibenwischers bekannt. Die Wischerwelle stützt sich über einen Federring an einem Lagergehäuse ab. Der Federring besitzt eine zur Längsmittelachse der Wischerwelle geneigt verlaufende Stützfläche, sodass er bei einer vorgegebenen Axialkraft elastisch radial nachgibt und die Wischerwelle in Achsrichtung passieren lässt. Er wirkt dabei wie eine Sollbruchstelle. Die durch die vorgegebene Auslösekraft begrenzten Reibkräfte erzeugen bei der Verschiebebewegung der Wischerwelle eine vernachlässigbare Dämpfung.

Aus der JP-A-62 099 244 ist ein Wischerlager bekannt, das über Scherstifte mit einer Fahrzeugkarosserie verbunden ist. Die Scherstifte scheren bei einer vorgegebenen Axialkraft auf die Wischerwelle ab, sodass das Wischerlager ungedämpft in die Karosserie zurückweicht.

### Vorteile der Erfindung

Bei der Erfindung ist ebenfalls eine in einem Wischerlager gelagerte Wischerwelle in die Fahrzeugkarosserie verschiebbar, wenn an ihrem aus der Fahrzeugkarosserie vorstehenden Ende von außen eine Axialkraft wirkt, die eine vorgegebene Größe übersteigt. Dadurch können einerseits die vorgeschriebenen Kriterien eingehalten und andererseits kann verhindert werden, dass sich die Wischerwelle verschiebt, wenn geringere Axialkräfte auftreten, die durch Blockieren des Wischarms hervorgerufen werden, z.B. bei Schneelast.

Im Bereich der Wischerwelle ist ein ausreichender Verschiebeweg vorgegeben. Dabei ist sicherzustellen, dass der Verschiebeweg voll ausgenutzt werden kann, indem der Abstand des Wischarms von der Fahrzeugkarosserie oder der Windschutzscheibe sowie der Abstand des inneren Endes der Wischerwelle oder eines mit diesem fest verbundenen Teils von einem benachbarten Fahrzeugteil zumindest dem Verschiebeweg entsprechen. Das Befestigungsteil weist im Bereich seiner Befestigung mit der Wischerwelle eine großflächige Abdeckkappe aus festem Material auf, um die Flächenpressung beim Aufprall auf das vorstehende Ende der Wischerwelle zu reduzieren und damit die Gefahr zu verringern, dass das Ende der Wischerwelle in den Körper eindringt.

Nach der Erfindung wird die Aufprallenergie über dem Verschiebeweg weitgehend aufgezehrt, indem die Bewegung der Wischerwelle über dem Verschiebeweg und insbesondere zum Ende des Verschiebewegs hin gedämpft wird. Zur Dämpfung des Aufpralls sind zwischen einem nach innen wirkenden Anschlag der Wischerwelle und einem mit der Fahrzeugkarosserie fest verbundenen Teil oder zwischen einem solchen Teil und der Fahrzeugkarosserie Mittel vorgesehen, die sich unter Einwirkung einer kritischen Axialkraft in Achsrichtung plastisch verformen. Solche Mittel können eine plastisch verformbare Blechhülse sein, die zweckmäßigerweise einen in Achsrichtung gewellten Bereich besitzt, oder dünnwandige, tellerförmige Elemente, die je nach Verschiebeweg zu mehreren wirkungsmäßig in Reihe angeordnet sein können. Diese Elemente können zur Wischerwelle oder zu anderen benachbarten Bauteilen ein so geringes Spiel aufweisen, dass sie sich bei ihrer Verformung an diese Bauteile anlegen und durch Reibung die Dämpfungswirkung verstärken. Schließlich können die Mittel so angeordnet sein, dass sie unter Einwirkung der kritischen Axialkraft gestaucht oder auseinander gezogen werden.

Ein weiterer Vorteil besteht darin, dass die Mittel an verschiedenen Stellen in Reihe wirkend angebracht sind. So können erste Mittel zwischen der Wischerwelle und einem im Lagergehäuse geführten Element, z.B. einer Lagerbuchse, zweite Mittel zwischen dem Element und dem Lagergehäuse, dritte Mittel zwischen dem Lagergehäuse und der Fahrzeugkarosserie oder der Platine und vierte Mittel zwischen der Platine und der Fahrzeugkarosserie vorgesehen werden. Dadurch kann zum einen ein langer Verschiebeweg mit einer hohen Energieentnahme erreicht werden, zum anderen können die Mittel so aufeinander abgestimmt werden, daß sie mit einer zunehmenden kritischen Axialkraft nacheinander wirksam werden, so daß je nach Schwere des Unfalls nur einige Mittel ausgetauscht zu werden brauchen.

### Zeichnung

Weitere Vorteile ergeben sich aus der folgenden Zeichnungsbeschreibung. In der Zeichnung sind eine Wischeranlage und Ausführungsbeispiele der Erfindung dargestellt, soweit es für das Verständnis der Erfindung erforderlich ist. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen schematischen Schnitt durch ein Wischerlager, dessen Ende von einer Fahrzeughaube überdeckt wird,
- Fig. 2: eine Variante zu Fig. 1 mit einem freistehenden Wischerlager,
- Fig. 3: einen Detailausschnitt entsprechend dem Bereich III in Fig. 3, wobei die rechte Hälfte der Fig. 3 die Anordnung nach einem Crash zeigt,
- Fig. 4: eine Variante zu Fig. 3,

- Fig. 5: eine Variante zu Fig. 3 mit ersten, zweiten und dritten plastisch und/oder elastisch verformbaren Mitteln im Ausgangszustand,
- Fig. 6: Ausführung nach Fig. 12 im Zustand nach einem schweren Crash,
- Fig. 7: eine Anordnung mit einem Verformungselement im Ausgangszustand, das sich beim Crash auseinanderzieht,
- Fig. 8: eine Anordnung nach Fig. 14 nach einem Crash,
- Fig. 9: einen Schnitt durch ein Verformungselement mit einer Schweißmutter,
- Fig. 10: einen Schnitt durch ein Verformungselement mit einem angeformten Durchzug für eine selbstschneidende Schraube und
- Fig. 11: eine perspektivische Ansicht einer Platine mit Wischerlagern.

### Beschreibung der Ausführungsbeispiele

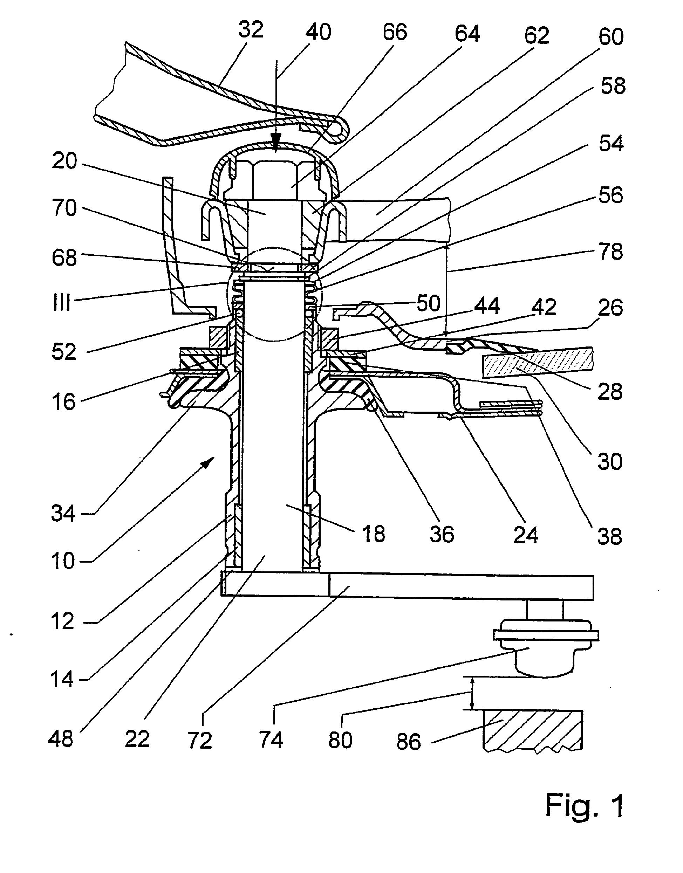

Ein Wischerlager 10, dessen Lagergehäuse 12, 126 Bestandteil einer Platine 130 (Fig. 18) zum Befestigen der Wischeranlage an einer Fahrzeugkarosserie 24 ist, enthält eine Wischerwelle 18, die im Lagergehäuse 12 über zwei Lagerbuchsen 14, 16 gelagert ist (Fig. 1). Das Lagergehäuse 12 ist mit einem Ende durch eine Öffnung der Fahrzeugkarosserie 24 gesteckt und unter Zwischenlage gummielastischer, schwingungsdämpfender Elemente 36 und 38 mit einem Flansch 34 und einer Scheibe 42 mittels einer Mutter 44 gegen die Fahrzeugkarosserie 24 verschraubt. Der Raum zwischen der Fahrzeugkarosserie 24 und einer Fahrzeughaube 32, die sich über das Wischerlager 10 erstrecken kann, ist durch eine Abdeckung 26 begrenzt, die mit einer Scheibendichtung 28 an eine Windschutzscheibe 30 anschließt. Die Wischerwelle 18 wird über eine Kurbel 72 mit einem Gelenkkopf 74 über ein nicht dargestelltes Gestänge von einem ebenfalls nicht dargestellten Wischermotor angetrieben. Zwischen der Kurbel 72 und der innenliegenden Stirnseite des Lagergehäuses 12 befindet sich eine Anlaufscheibe 48, die eine axiale Fixierung der Wischerwelle 18 an ihrem inneren Ende 22 darstellt. An ihrem äußeren Ende 20 stützt sich die Wischerwelle 18 über eine Anlaufscheibe 50, eine Blechhülse 56, eine Scheibe 54 und einen Sicherungsring 58 axial an dem mit der Fahrzeugkarosserie 24 fest verbundenen Lagergehäuse 12 ab. Das Lagergehäuse 12 überragt die Lagerbuchse 16 stirnseitig und bildet mit der Wischerwelle 18 und der Anlaufscheibe 50 einen Ringraum, in den ein Dichtring 52 gelegt ist. An dem äußeren Ende 20 der Wischerwelle 18 ist ein Befestigungsteil 60 eines Wischarms befestigt, indem eine Mutter 64 das Befestigungsteil 60 über einen Klemmkonus 62 gegen einen Stützring 68 drückt, der sich an einem Absatz 70 der Wischerwelle 18 abstützt. Die Mutter 64 trägt nach außen eine feste, großflächige Abdeckkappe 66, um die Flächenpressung bei einem Aufprall zu verringern.

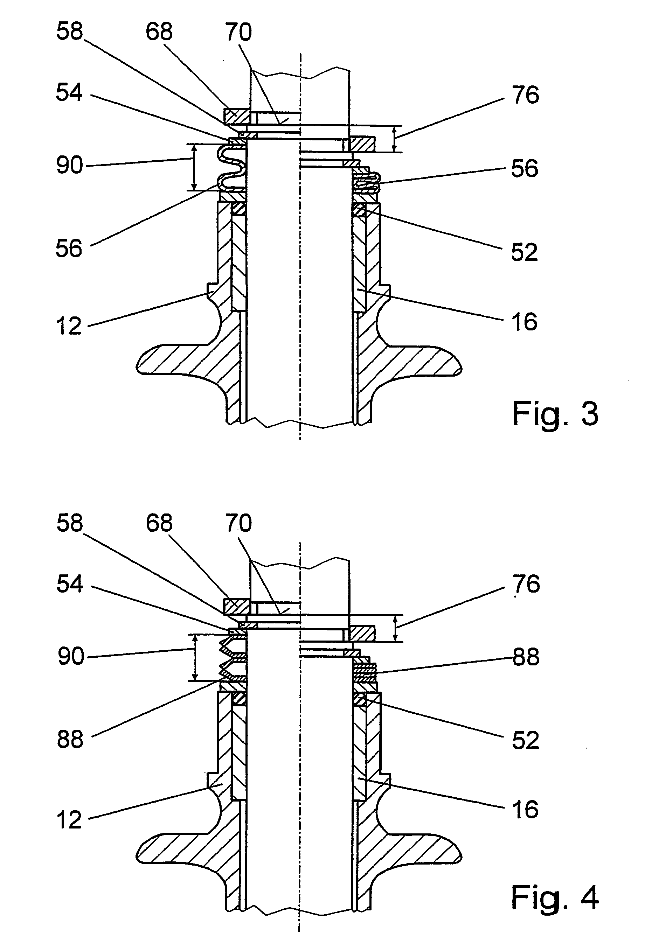

Bei einem Aufprall wirkt eine axiale Kraft 40 auf die Wischerwelle 18. Wenn sie ein vorgegebenes, kritisches Maß überschreitet, wird die Blechhülse 56 zusammengedrückt und die Wischerwelle 18 verschiebt sich um einen Verschiebeweg 76 (Fig. 3) nach innen. Durch die Verformungsarbeit der Blechhülse 56 wird die Bewegung der Wischerwelle 18 gedämpft und die Aufprallenergie vernichtet. Die dabei zu leistende Verformungsarbeit kann durch die Ausgestaltung eines gewellten Bereichs 90 der Blechhülse 56 modifiziert werden. Ferner kann das Spiel zwischen der Blechhülse 56 und der Wischerwelle 18 so bemessen werden, daß sich die Blechhülse 56 bei der Verformung an die Wischerwelle 18 anlegt, so daß durch Reibung die Dämpfung mit zunehmendem Verschiebeweg ansteigt. Damit der Verschiebeweg 76 voll ausgenutzt werden kann, ist es erforderlich, daß der Abstand zwischen dem Befestigungsteil 60 des Wischarms und der Fahrzeugkarosserie 24 bzw. der Abdekkung 26 oder der Windschutzscheibe 30 sowie der Abstand 80 zwischen dem Gelenkkopf 74 und einem benachbarten Fahrzeugteil 86 mindestens dem Verschiebeweg 76 entsprechen.

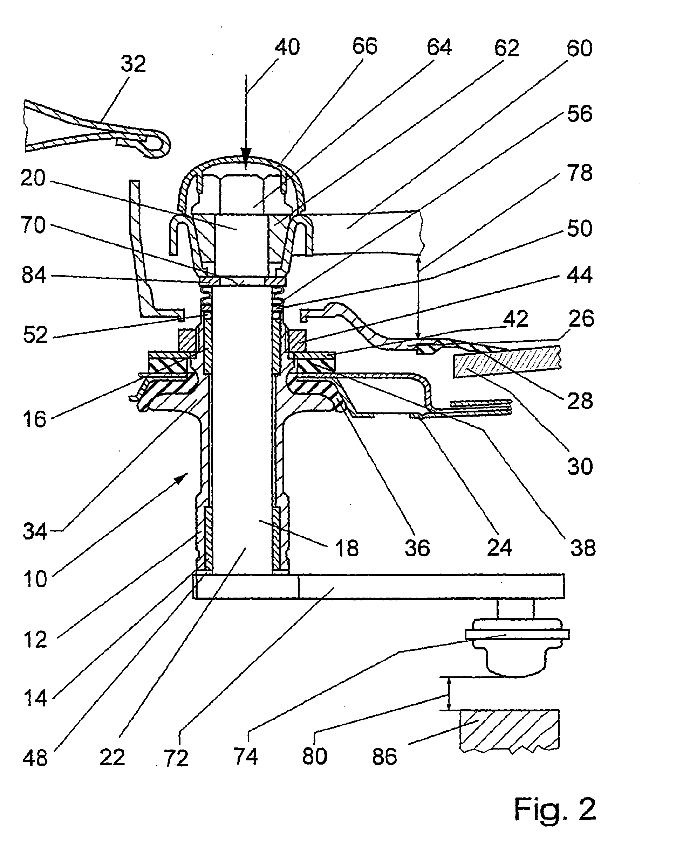

Die Fig. 2 zeigt eine Ausführung mit einem Wischerlager 10, das außen nicht von der Fahrzeughaube 32 überdeckt wird. Ferner ist an dem äußeren Ende 20 der Wischerwelle 18 ein Zwischenring 84 vorgesehen, an dem sich einerseits die Blechhülse 56 und andererseits das Befestigungsteil 60 abstützen. Dadurch spart man axiale Baulänge ein, so daß bei sonst gleichen Gegebenheiten ein längerer Verschiebeweg 76 möglich ist.

Bei der Ausführung nach Fig. 4 sind anstelle der Blechhülse 56 dünnwandige, tellerförmige Elemente 88 vorgesehen, die wirkungsmäßig in Reihe angeordnet sind und unter Einfluß einer kritischen Axialkraft 40 flach gedrückt werden (rechter Teil von Fig. 4).

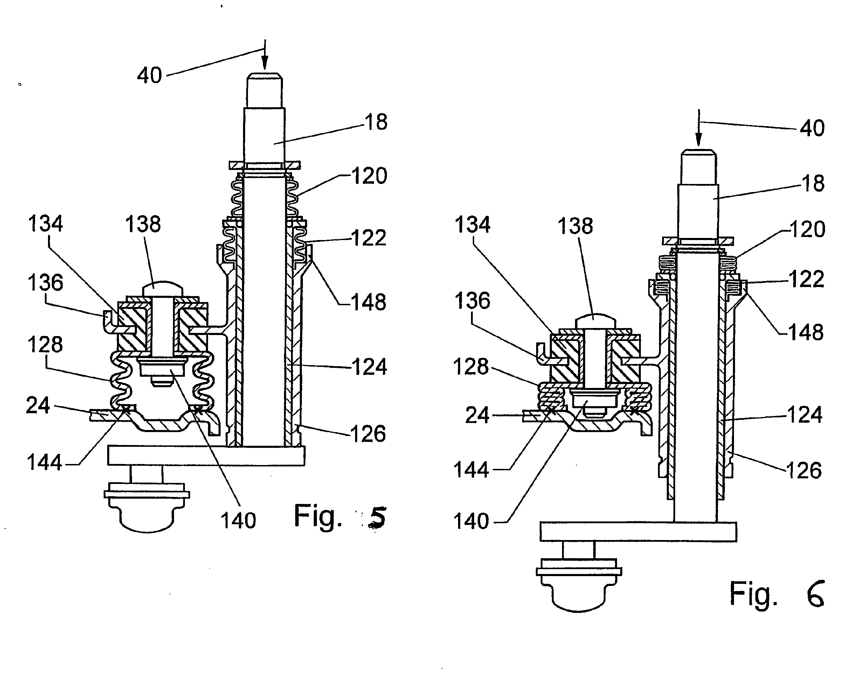

Die Ausführung nach Fig. 5 und 6 zeigt eine Wischerwelle 18, die sich über ein erstes, plastisch und zum geringen Teil elastisch verformbares Mittel 120 in Form einer gewellten Blechhülse an einem Lagerelement 124 abstützt. Diese stützt sich wiederum gegenüber einem Lagergehäuse 126 über zweite, plastisch verformbare Mittel 122 ab. Das Lagergehäuse 126 besitzt ein Lagerauge 136, in dem ein Gummidämpfer 134 eingesetzt ist, um eine Geräuschübertragung auf die Fahrzeugkarosserie zu vermeiden. Der Gummidämpfer 134 ist mittels einer Schraube 138 und einer Scheibe 146 an einem dritten, plastisch verformbaren Mittel 128 in Form einer gewellten Blechhülse befestigt, über die sich das Lagergehäuse 126 gegenüber der Fahrzeugkarosserie 24 abstützt.

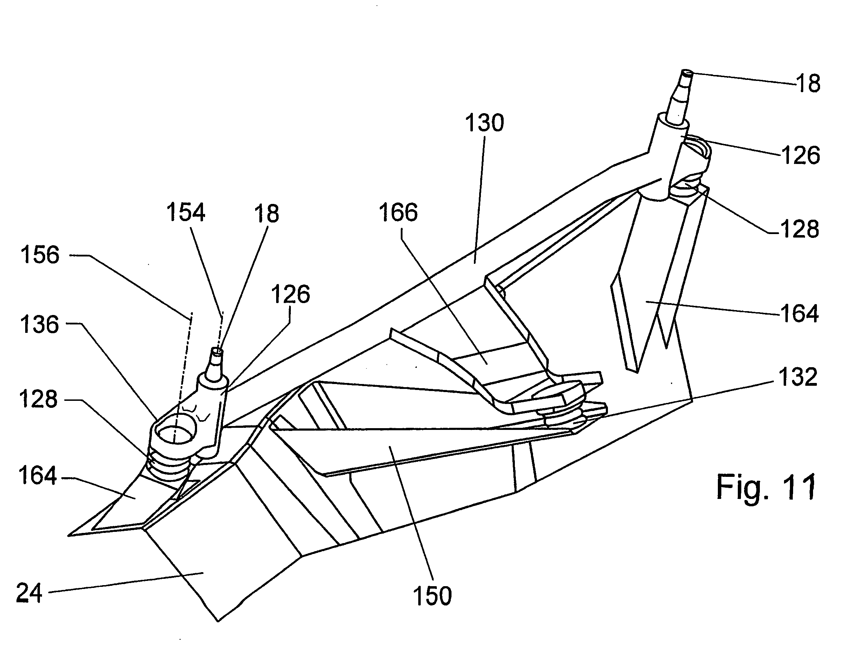

Überschreitet bei einem Crash die kritische Axialkraft 40 einen vorgegebenen Betrag, verformen sich das erste Mittel 120, das zweite Mittel 122 und das dritte Mittel 128, wodurch sich ein maximaler Verschiebeweg der Wischerwelle 18 ergibt. Grundsätzlich ist es ferner möglich, daß sich das Lagergehäuse 126 über das dritte Mittel 128 gegenüber einer Platine 130 (Fig. 11) abstützt, die sich wiederum gegenüber der Fahrzeugkarosserie 24 über vierte, plastisch verformbare Mittel 132 abstützt. Je nach Anforderung können die Mittel 120, 122, 128 und 132 einzeln oder zu mehreren zusammen angewendet werden, wodurch sich der Verschiebeweg und das Maß der Verformungsenergie auf den jeweiligen Anwendungsfall abstimmen lassen. Dabei kann es zweckmäßig sein, daß die Mittel 120, 122, 128, 132 so aufeinander abgestimmt sind, daß sie mit zunehmender Axialkraft 40 nacheinander zur Wirkung kommen, so daß bei kleineren Unfällen nur die zuerst wirksam werdenden Mittel ausgetauscht zu werden brauchen. Die Verformungsarbeit kann durch Reibarbeit unterstützt werden, indem sich die Mittel 120, 122 während der Verformung an die Wischerwelle 18 bzw. das Lagerelement 124 oder eine Wand 148 des Lagergehäuses 126 anlegen.

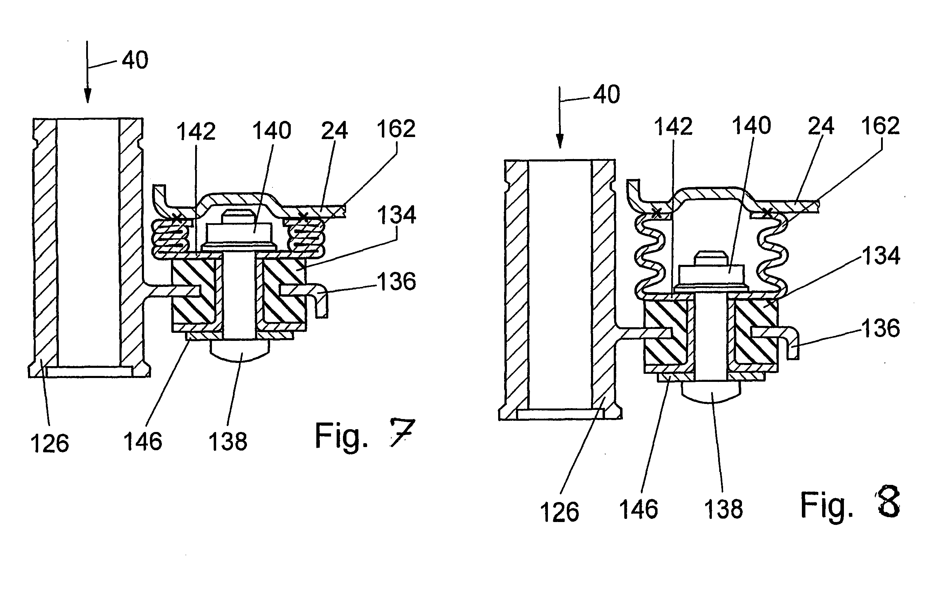

Anstelle oder in Kombination mit den gewellten Blechhülsen können auch die zuvor beschriebenen Maßnahmen zur Dämpfung der Axialbewegung der Wischerwelle 18 vorgesehen werden. Die Fig. 6 zeigt die Ausführung nach Fig. 5, bei der alle Mittel 120, 122 und 128 maximal beansprucht sind und somit ein maximaler Verschiebeweg der Wischerwelle 18 erreicht ist. Dabei werden die Mittel 120, 122, 128 unter der Wirkung der Axialkraft 40 gestaucht. Demgegenüber zeigt die Ausführung nach Fig. 7 ein Verformungselement 162, das unter der Einwirkung der Axialkraft 40 gestreckt wird (Fig. 8).

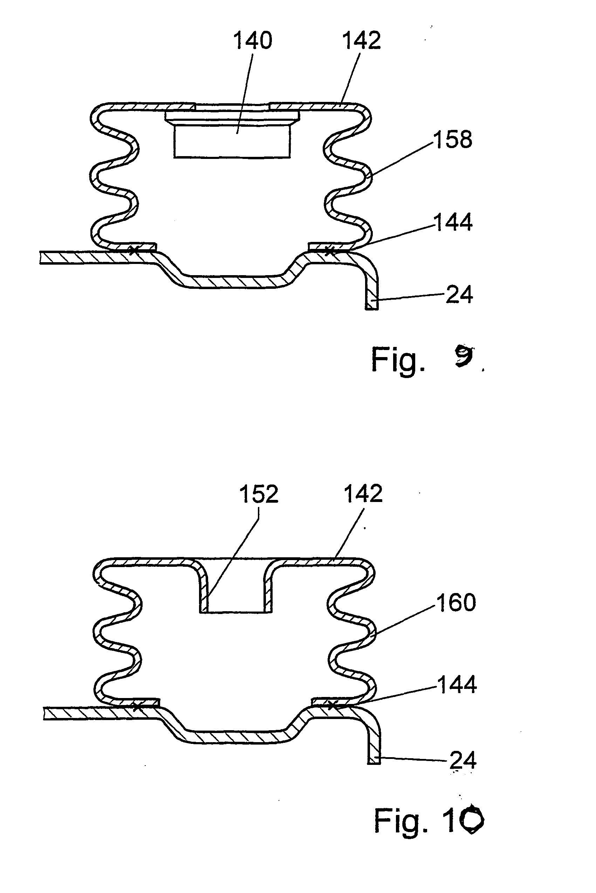

In Fig. 16 ist ein Verformungselement 158 dargestellt, das an einem Ende über Schweißpunkte 144 an der Fahrzeugkarosserie 24 befestigt ist und das am anderen Ende einen Boden 142 mit einer Schweißmutter 140 aufweist, in die die Schraube 138 eingreifen kann. Wird als Schraube 138 eine selbstschneidende Schraube verwendet, ist es zweckmäßig, daß an den Boden 142 eines Verformungselements 160 (Fig. 10) ein Durchzug 152 für die Schraube 138 angeformt ist.

Fig. 11 zeigt eine Ausführung, bei der die Lagergehäuse 126 über eine Platine 130 mit einer Motorplatine 166 über eine Konsole 150 und Stützen 164 an der Fahrzeugkarosserie 24 befestigt sind. Zwischen den Lageraugen 136 und den Stützen 164 sind die dritten Mittel 128 angeordnet, während zwischen der Konsole 150 und der Motorplatine 166 vierte Mittel 132 vorgesehen sind. Die Achsen 156 der Mittel 128, 132 werden zweckmäßigerweise im wesentlichen parallel zu den Achsen 154 der Wischerwellen 18 ausgerichtet, damit die kritische Axialkraft 40 optimal in die Mittel 128, 132 eingeleitet wird.

### Bezugszeichen

- 10: Wischerlager
- 12: Lagergehäuse
- 14: Lagerbuchse
- 16: Lagerbuchse
- 18: Wischerwelle

- 20: äußeres Ende
- 22: inneres Ende
- 24: Fahrzeugkarosserie
- 26: Abdeckung
- 28: Scheibendichtung
- 30: Windschutzscheibe
- 32: Fahrzeughaube
- 34: Flansch
- 36: elastisches Element
- 38: elastisches Element
- 40: Axialkraft
- 42: Scheibe
- 44: Mutter
- 48: Anlaufscheibe
- 50: Anlaufscheibe

- 52: Dichtring
- 54: Scheibe
- 56: Blechhülse
- 58: Sicherungsring
- 60: Befestigungsteil, Wischarm
- 62: Klemmkonus
- 64: Mutter
- 66: Abdeckkappe
- 68: Stützring
- 70: Absatz
- 72: Kurbel
- 74: Gelenkkopf

- 78: Abstand
- 80: Abstand
- 84: Zwischenring
- 86: Fahrzeugteil
- 88: tellerförmiges Element
- 90: gewellter Bereich

- 120: erste Mittel
- 122: zweite Mittel
- 124: Lagerelement
- 126: Lagergehäuse
- 128: dritte Mittel
- 130: Platine
- 132: vierte Mittel
- 134: Gummidämpfer
- 136: Lagerauge
- 138: Schraube
- 140: Schweißmutter
- 142: Boden
- 144: Schweißpunkt
- 146: Scheibe
- 148: Wand
- 150: Konsole
- 152: Durchzug
- 154: Achse (Wischerwelle)
- 156: Achse (Mittel)
- 158: Verformungselement
- 160: Verformungselement
- 162: Verformungselement
- 164: Stütze
- 166: Motorplatine

## Patentansprüche

1. Wischeranlage mit mindestens einem Wischerlager (10), in dessen Lagergehäuse (12, 126) eine Wischerwelle (18) gelagert und axial fixiert ist und an ihrem aus einer Fahrzeugkarosserie (24) vorstehenden Ende (20) einen Wischarm (60) trägt,
wobei die Wischerwelle (18) in die Fahrzeugkarosserie (24) verschiebbar ist, wenn von außen auf das Ende (20) eine Axialkraft (40) wirkt, die eine vorgegebene Größe übersteigt, **dadurch gekennzeichnet, dass** zwischen einem nach innen wirkenden Anschlag (54, 58, 84) der Wischerwelle (18) und der Fahrzeugkarosserie (24) oder einem mit dieser fest verbundenen Teil (12, 130) in Achsrichtung plastisch verformbare Mittel (56, 88, 120, 122, 128, 132, 158, 160, 162) vorgesehen sind.

2. Wischeranlage nach Anspruch 1, **dadurch gekennzeichnet, dass** die Bewegung der Wischerwelle (18) zum Ende des Verschiebewegs verstärkt gedämpft wird.

3. Wischeranlage nach Anspruch 1 oder 2, **dadurch gekennzeichnet, dass** die Mittel ein oder mehrere wirkungsmäßig in Reihe angeordnete, dünnwandige, tellerförmige Elemente (88) sind.

4. Wischeranlage nach Anspruch 1 oder 2, **dadurch gekennzeichnet, dass** die Mittel eine plastisch verformbare Blechhülse (56, 120, 122, 128, 158, 160, 162) sind.

5. Wischeranlage nach Anspruch 4, **dadurch gekennzeichnet, dass** die Blechhülse (56, 120, 122, 128, 158, 160, 162) einen in Achsrichtung gewellten Bereich (90) besitzt.

6. Wischeranlage nach Anspruch 4 oder 5, **dadurch gekennzeichnet, dass** die Blechhülse (56, 120, 122, 128, 158, 160, 162) so angeordnet ist, dass sie bei einem Crash unter Einwirkung der kritischen Axialkraft (40) gestaucht wird.

7. Wischeranlage nach Anspruch 4 oder 5, **dadurch gekennzeichnet, dass** die Blechhülse (56, 120, 122, 128, 158, 160, 162) so angeordnet ist, dass sie bei einem Crash unter Einwirkung der kritischen Axialkraft (40) auseinander gezogen wird (Fig. 8).

8. Wischeranlage nach einem der vorhergehenden Ansprüche, **dadurch gekennzeichnet, dass** sich die Mittel (56, 114, 122) bei der Verformung an eine benachbarte Wand (12, 18, 148) anlegen und die Bewegung der Wischerwelle (18) zusätzlich durch Wandreibung dämpfen.

9. Wischeranlage nach einem der vorhergehenden Ansprüche, **dadurch gekennzeichnet, dass** der Anschlag der Wischerwelle (18) von einem Zwischenring (84) gebildet ist, der gleichzeitig als Anlagefläche für ein Befestigungsteil (60) eines Wischarms dient.

10. Wischeranlage nach einem der vorhergehenden Ansprüche, **dadurch gekennzeichnet, dass** sich die Wischerwelle (18) über erste plastisch verformbare Mittel (120) an einem Lagerelement (124) abstützt, das sich über zweite plastisch und/oder elastisch verformbare und/oder kraftschlüssige Mittel (122) am Lagergehäuse (126) abstützt.

11. Wischeranlage nach einem der vorhergehenden Ansprüche, **dadurch gekennzeichnet, dass** sich das Lagergehäuse (126) über dritte plastisch und/oder elastisch verformbare und/oder kraftschlüssige Mittel (128) an der Fahrzeugkarosserie (24) oder einer Platine (130) der Wischeranlage abstützt.

12. Wischeranlage nach einem der vorhergehenden Ansprüche, **dadurch gekennzeichnet, dass** sich die Platine (130) der Wischeranlage über vierte plastisch und/oder elastisch verformbare und/oder kraftschlüssige Mittel (132) an der Fahrzeugkarosserie (24) abstützt.

13. Wischeranlage nach Anspruch 11 oder 12, **dadurch gekennzeichnet, dass** die Mittel (128, 132) ein Verformungselement (158) sind, das an einem Ende mit der Fahrzeugkarosserie (24) befestigt ist und am anderen Ende einen Boden (142) aufweist, an dem eine Schweißmutter (140) angebracht ist.

14. Wischeranlage nach Anspruch 11 oder 12, **dadurch gekennzeichnet, dass** die Mittel (128, 132) ein Verformungselement (160) sind, das an einem Ende mit der Fahrzeugkarosserie (24) befestigt ist und am anderen Ende einen Boden (142) aufweist, an dem ein Durchzug (152) für eine selbstschneidende Schraube (138) angeformt ist.

15. Wischeranlage nach einem der Ansprüche 10 bis 12, **dadurch gekennzeichnet, dass** die Mittel (120, 122, 128, 132) so aufeinander abgestimmt sind, dass sie mit zunehmender kritischer Axialkraft (40) nacheinander zur Wirkung gelangen.

16. Wischeranlage nach einem der Ansprüche 10 bis 12, **dadurch gekennzeichnet, dass** die Achsen (156) der Mittel (120, 122, 128, 132) im Wesentlichen parallel zur Achse (154) der Wischerwelle (18) ausgerichtet sind.

## Claims

1. Wiper system with at least one wiper bearing (10), in the bearing housing (12, 126) of which a wiper shaft (18) is mounted and is fixed axially and bears a wiper arm (60) at its end (20) protruding out of a vehicle body (24), the wiper shaft (18) being displaceable into the vehicle body (24) if an axial force (40) which exceeds a predetermined size acts on the end (20) from the outside, **characterized in that** means (56, 88, 120, 122, 128, 132, 158, 160, 162) which are plastically deformable in the axial direction are provided between an inwardly acting stop (54, 58, 84) of the wiper shaft (18) and the vehicle body (24) or a part (12, 130) connected fixedly to the latter.

2. Wiper system according to Claim 1, **characterized in that** the movement of the wiper shaft (18) is intensively damped towards the end of the displacement distance.

3. Wiper system according to Claim 1 or 2, **characterized in that** the means are one or more thin-walled, plate-shaped elements (88) arranged in a row in terms of action.

4. Wiper system according to Claim 1 or 2, **characterized in that** the means are a plastically deformable sheet-metal sleeve (56, 120, 122, 128, 158, 160, 162).

5. Wiper system according to Claim 4, **characterized in that** the sheet-metal sleeve (56, 120, 122, 128, 158, 160, 162) has a region (90) which is corrugated in the axial direction.

6. Wiper system according to Claim 4 or 5, **characterized in that** the sheet-metal sleeve (56, 120, 122, 128, 158, 160, 162) is arranged in such a manner that it is compressed under the effect of the critical axial force (40) during a crash.

7. Wiper system according to Claim 4 or 5, **characterized in that** the sheet-metal sleeve (56, 120, 122, 128, 158, 160, 162) is arranged in such a manner that it is pulled apart under the effect of the critical axial force (40) during a crash (Fig. 8).

8. Wiper system according to one of the preceding claims, **characterized in that** the means (56, 114, 122) bear when deformed against an adjacent wall (12, 18, 148) and additionally damp the movement of the wiper shaft (18) by means of friction against the wall.

9. Wiper system according to one of the preceding claims, **characterized in that** the stop of the wiper shaft (18) is formed by an intermediate ring (84) which serves at the same time as a bearing surface for a fastening part (60) of a wiper arm.

10. Wiper system according to one of the preceding claims, **characterized in that** the wiper shaft (18) is supported via first plastically deformable means (120) on a bearing element (124) which is supported via second plastically and/or elastically deformable and/or frictional means (122) on the bearing housing (126).

11. Wiper system according to one of the preceding claims, **characterized in that** the bearing housing (126) is supported via third plastically and/or elastically deformable and/or frictional means (128) on the vehicle body (24) or a mounting plate (130) of the wiper system.

12. Wiper system according to one of the preceding claims, **characterized in that** the mounting plate (130) of the wiper system is supported via fourth plastically and/or elastically deformable and/or frictional means (132) on the vehicle body (24).

13. Wiper system according to Claim 11 or 12, **characterized in that** the means (128, 132) are a deformation element (158) which is fastened at one end to the vehicle body (24) and at the other end has a base (142) on which a weld nut (140) is fixed.

14. Wiper system according to Claim 11 or 12, **characterized in that** the means (128, 132) are a deformation element (160) which is fastened at one end to the vehicle body (24) and at the other end has a base (142) on which an eyelet (152) for a tapping screw (138) is integrally formed.

15. Wiper system according to one of Claims 10 to 12, **characterized in that** the means (120, 122, 128, 132) are coordinated with one another in such a manner that, with increasing critical axial force (40), they come into action successively.

16. Wiper system according to one of Claims 10 to 12, **characterized in that** the axes (156) of the means (120, 122, 128, 132) are aligned essentially parallel to the axis (154) of the wiper shaft (18).

## Revendications

1. Installation d'essuie-glace comportant au moins un palier d'essuie-glace (10) dont le boîtier de palier (12, 126) loge un axe d'essuie-glace (18) bloqué axialement et dont l'extrémité (20) passant de la carrosserie (24) du véhicule porte un bras d'essuie-glace (60),
l'axe d'essuie-glace (18) coulissant dans la carrosserie (24) du véhicule si une force axiale (40) dépassant une amplitude prédéfinie est exercée de l'extérieur sur l'extrémité (20),
**caractérisée par**
des moyens (56, 88, 120, 122, 128, 132, 158, 160, 162) déformables plastiquement dans la direction axiale entre une butée agissant vers l'extérieur (54, 58, 84) de l'axe d'essuie-glace (18) et la carrosserie du véhicule (24) ou avec une partie (12, 130) reliée solidairement à celle-ci.

2. Installation d'essuie-glace selon la revendication 1,
**caractérisée en ce que**
le mouvement de l'axe d'essuie-glace (18) est fortement amorti à la fin de la course de coulissement.

3. Installation d'essuie-glace selon l'une des revendications 1 ou 2,
**caractérisée en ce que**
les moyens sont constitués par un ou plusieurs éléments en forme de coupelle (88) à parois minces et installés en série dans le sens du fonctionnement.

4. Installation d'essuie-glace selon la revendication 1 ou 2,
**caractérisée en ce que**
les moyens sont constitués par un manchon en tôle (56, 120, 122, 128, 158, 160, 162) plastiquement déformable.

5. Installation d'essuie-glace selon la revendication 4,
**caractérisée en ce que**
le manchon en tôle (56, 120, 122, 128, 158, 160, 162) comporte une direction axiale avec une zone ondulée (90).

6. Installation d'essuie-glace selon les revendications 4 ou 5,
**caractérisée en ce que**
le manchon en tôle (56, 120, 122, 128, 158, 160, 162) est installé pour qu'en cas de collision le manchon se comprime sous l'effet de la force axiale critique (40).

7. Installation d'essuie-glace selon les revendications 4 ou 5,
**caractérisée en ce que**
le manchon en tôle (56, 120, 122, 128, 158, 160, 162) est installé pour qu'en cas de collision il se rétracte sous l'effet d'une force axiale critique (40) (figure 8).

8. Installation d'essuie-glace selon l'une quelconque des revendications 1 à 7,
**caractérisée en ce que**
les moyens (56, 114, 122) s'appliquent, lors de la déformation, contre une paroi voisine (12, 18, 148) et le mouvement de l'axe d'essuie-glace (18) est en outre amorti par le frottement des parois.

9. Installation d'essuie-glace selon l'une quelconque des revendications 1 à 8,
**caractérisée en ce que**
la butée de l'axe d'essuie-glace (18) est formée par une bague intermédiaire (84) qui sert en même temps de surface d'appui pour des moyens de fixation (60) du bras d'essuie-glace.

10. Installation d'essuie-glace selon l'une quelconque des revendications 1 à 9,
**caractérisée en ce que**
l'axe d'essuie-glace (18) s'appuie par l'intermédiaire de premiers moyens déformables plastiquement (120) contre un élément de palier (124) qui s'appuie par des seconds moyens (122) déformables plastiquement et/ou élastiquement et/ou par une liaison par la force contre le boîtier de palier (126).

11. Installation d'essuie-glace selon l'une quelconque des revendications 1 à 10,
**caractérisée en ce que**
le boîtier de palier (126) s'appuie, par l'intermédiaire de troisièmes moyens (128) à déformation plastique et/ou élastique et/ou par la force contre la carrosserie du véhicule (24) ou une platine (130) de l'installation d'essuie-glace.

12. Installation d'essuie-glace selon l'une quelconque des revendications 1 à 11,
**caractérisée en ce que**
la platine (130) de l'installation d'essuie-glace s'appuie par des quatrièmes moyens (132) à déformation plastique et/ ou élastique et/ou par la force contre la carrosserie (24) du véhicule.

13. Installation d'essuie-glace selon les revendications 11 ou 12,
**caractérisée en ce que**
les moyens (128, 132) sont constitués par un élément déformable (158) dont une extrémité est fixée à la carrosserie (24) du véhicule et dont l'autre extrémité comporte un fond (142) recevant un écrou soudé (140).

14. Installation d'essuie-glace selon les revendications 11 ou 12,
**caractérisée en ce que**
les moyens (128, 132) sont constitués par un élément déformable (160) dont une extrémité est fixée à la carrosserie (24) du véhicule et dont l'autre extrémité comporte un fond (142) sur lequel est formé un passage (152) pour une vis auto-taraudeuse (138).

15. Installation d'essuie-glace selon l'une des revendications 10 à 12,
**caractérisée en ce que**
les moyens (120, 122, 128, 132) sont définis les uns par rapport aux autres pour coopérer pour absorber une force axiale (40) de plus en plus critique.

16. Installation d'essuie-glace selon l'une des revendications 10 à 12,
**caractérisée en ce que**
les axes (156) des moyens (120, 122, 128, 132) sont pour l'essentiel parallèles à l'axe (154) de l'axe d'essuie-glace (18).
